# NOUVEAU FASCICULE DE BREVET EUROPEEN

(11) **EP 1 370 491 B2**
(45) Date de publication et mention de la décision concernant l'opposition: **16.06.2010**
(45) Mention de la délivrance du brevet: 13.06.2007
(21) Numéro de dépôt: 02701296.2
(22) Date de dépôt: 22.02.2002
(51) Int. Cl.: C01D 7/38, B01J 2/00

(54) **GRANULE DE SUBSTANCE MINERALE AGGLOMEREE, RESISTANT A L'ABRASION, POUDRE COMPRENANT DE TELS GRANULES ET PROCEDE POUR SA FABRICATION**
ABRIEBFESTES GRANULAT AUS AGGLOMERIERTEM MINERALISCHEM MATERIAL, DIESES GRANULAT ENTHALTENDES PULVER UND VERFAHREN ZU DESSEN HERSTELLUNG
ABRASION-RESISTANT AGGLOMERATE MINERAL SUBSTANCE GRANULE, POWDER COMPRISING SUCH GRANULES AND PRODUCTION METHOD THEREFOR

(30) Priorité: 26.02.2001 FR 0102687
(43) Date de publication de la demande: 17.12.2003
(73) Titulaire: SOLVAY (SOCIETE ANONYME), 1050 Bruxelles (BE)
(72) Inventeur: CRIADO, Claude, F-54110 Dombasle-sur-Meurthe (FR); GROSJEAN, Francis, F-54110 Dombasle-Sur-Meurthe (FR); MEUNIER, Gilles, F-54110 Dombasle-Sur-Meurthe (FR)
(74) Mandataire: Gilliard, Pierre
(86) Numéro de dépôt international: PCT/EP2002/001980
(87) Numéro de publication internationale: WO 2002/068328

(56) Documents cités:
- EP-A- 0 395 134
- WO- -00//17309
- GB- - 1 116 664
- US- - 2 041 088
- US- - 3 908 045
- US- - 4 518 516
- US-A- 1 546 156
- US-A- 5 690 701

## Description

L'invention concerne un procédé pour la fabrication d'une poudre de granules de substance minérale agglomérée, résistant à l'abrasion.

De nombreuses substances minérales telles que par exemple les sels de sodium ou de magnésium sont souvent utilisées à l'état de granules.

Pour un usage efficace, ces granules doivent en général posséder une taille appropriée. Par exemple, pour de nombreuses applications, telles que les additifs pour détergents ou les utilisations médicales et pharmaceutiques, le diamètre moyen des granules est idéalement compris entre 250 et 1000 microns.

Une caractéristique importante des techniques de production de granules est leur distribution granulométrique. Certaines techniques aboutissent à des distributions remarquablement étroites. Malheureusement elles sont en général plus coûteuses. Si on désire une technique qui fonctionne dans des conditions économiquement intéressantes, la distribution granulométrique est habituellement fort large, ce qui a pour conséquence que la taille de l'ensemble des granules obtenues est rarement satisfaisante pour une application donnée. Dans ces conditions, il est connu de séparer, par exemple par tamisage, les granules selon leur taille, afin de les destiner à des applications différentes.

Afin que l'ensemble de la production trouve une utilisation il faudrait que la consommation des différentes classes granulométriques corresponde aux quantités produites. C'est rarement le cas et il existe des surplus, les quantités de fines granulométries produites étant souvent excédentaires par rapport aux grosses granulométries.

De plus; lorsque les granules sont produits par des cristalliseurs, les productivités (exprimées par exemple en tonnes/heure) diminuent de façon importante lorsqu'on désire produire des granules de gros diamètre. De manière concomitante, leur coût de production évolue évidemment en sens inverse.

Afin de résoudre ce problème, il est connu d'agglomérer des fines particules de substance minérale pour en obtenir de plus grosses. Des techniques d'agglomération mécanique telles que le compactage peuvent être utilisées. Cependant, ces produits agglomérés ont le désavantage d'être friables. Suite à leur mauvaise résistance à l'abrasion, des fines particules réapparaissent lors de leur manipulation. De plus, ces techniques d'agglomération connues ne sont applicables qu'aux substances minérales qui s'agglomèrent facilement. Pour les autres, la friabilité de ces granules connus est telle qu'ils sont difficilement utilisables.

On a tenté de remédier à cet inconvénient en utilisant des additifs tensioactifs anioniques lors de la fabrication des agglomérats. Une telle utilisation est notamment décrite dans la demande de brevet européen EP0452164 qui concerne du perborate de sodium tétrahydraté à résistance à l'abrasion améliorée, constitué d'agglomérats distincts de particules. Les dimensions des dites particules n'excèdent pas 30 µ. Cependant, l'utilisation d'additifs présente un inconvénient pour la production de granules de substance minérale lorsque celle ci doit être de grande pureté. Les applications pharmaceutiques exigent notamment de tels produits de grande pureté.

L'invention vise dès lors à remédier à ces inconvénients en fournissant des granules de substance minérale agglomérée, qui aient une bonne résistance à l'abrasion et puissent être produits par un procédé simple, économique et ne requérant l'utilisation d'aucun additif.

En conséquence, l'invention concerne un procédé pour la fabrication d'une poudre comprenant des granules, les granules comprenant un agglomérat de particules de substance minérale, l'agglomérat est enrobé d'une couche extérieure monolithique, selon lequel, dans une première étape on forme des agglomérats de particules de substance minérale, caractérisé en ce que dans une deuxième étape, on enrobe les agglomérats d'une couche extérieure monolithique.

Dans le procédé selon l'invention, le granule peut-être de forme quelconque. Il peut être de petit diamètre ou de diamètre plus important. L'intérêt économique de l'invention sera toutefois plus marqué dans le cas de granule de diamètre important. En effet, le coût de production de granules obtenues selon l'invention augmente moins vite, en fonction des diamètres produits, que ceux des granules connus.

Il est avantageux que le granule ait un diamètre moyen compris entre 200 µm et 5000 µm. De manière préférée, leur diamètre moyen est supérieur à 250 µm. De préférence il est inférieur à 2500µm. Lorsque le granule est approximativement sphérique, ce diamètre moyen est son diamètre. Lorsque le granule est de forme quelconque, son diamètre moyen est défini comme étant six fois le rapport entre son volume et sa surface extérieure.

La substance minérale à laquelle l'invention s'applique peut être toute substance minérale dont on désire former des granules à partir de particules plus petites. A titre d'exemple on peut citer : les chlorures de sodium ou de magnésium, le carbonate de sodium, le bicarbonate de sodium. Il est avantageux d'appliquer l'invention aux substances minérales qui donnent lieu à des agglomérats de particules ayant de mauvaises propriétés mécaniques.

L'invention est particulièrement bien adaptée au bicarbonate de sodium.

Selon son diamètre moyen et la taille des particules dont il est constitué, l'agglomérat contient un nombre variable de ces particules : de quelques dizaines à plusieurs millions.

Conformément à l'invention, l'agglomérat est enrobé d'une couche extérieure monolithique. On entend par couche monolithique une couche de matière qui est essentiellement continue. Elle n'est pas agglomérée. La matière qui la constitue est essentiellement en un seul bloc unitaire, non aggloméré. Elle est de préférence à l'état cristallin. La couche peut être un monocristal. Elle est plus généralement un polycristal. La couche monolithique forme une enveloppe autour de l'agglomérat, qui a pour fonction de retenir mécaniquement les particules agglomérées. Elle peut être étanche ou poreuse et présenter des défauts pour autant qu'elle assure sa fonction. La couche monolithique qui enrobe l'agglomérat peut également en certains endroits pénétrer plus profondément dans celui-ci, suite à l'infiltration de fissures présentes initialement dans l'agglomérat.

L'épaisseur de la couche d'enrobage doit être suffisante pour réaliser sa fonction technique définie ci-dessus et assurer les bonnes propriétés mécaniques recherchées. Il est inutile que son épaisseur soit trop importante, car cela réduirait les avantages économiques de l'invention.

L'épaisseur minimum de la couche monolithique dépend de divers paramètres, parmi lesquels figurent notamment la substance dont elle est constituée, la grosseur de l'agglomérat, le diamètre moyen des particules qui le constituent, la résistance mécanique recherchée. En règle générale, elle doit être déterminée dans chaque cas particulier par un travail de routine au laboratoire.

La couche extérieure monolithique a en général une épaisseur supérieure à 0,25 µm. Il est en général avantageux que cette épaisseur ne dépasse pas 50 µm. On a observé que des couches extérieures monolithiques ayant une épaisseur supérieure à 0,5 µm conviennent particulièrement bien. De préférence, leur épaisseur est inférieure ou égale à 30 µm.

Conformément à l'invention, l'enrobage des agglomérats par la couche extérieure monolithique améliore sensiblement leur résistance à l'abrasion.

Le choix de la matière constitutive de la couche d'enrobage extérieure est déterminé par les propriétés finales recherchées. Outre la résistance à l'abrasion, on peut par exemple rechercher des propriétés antistatiques ou hydrophobes en utilisant une couche d'enrobage en matière organique.

Il est cependant avantageux que la couche extérieure monolithique soit constituée d'une substance minérale.

De manière préférée, la substance minérale de la couche extérieure monolithique est sensiblement identique à la substance minérale des particules. Ce mode de réalisation présente l'avantage que le granule résultant peut être d'une grande pureté.

Dans un mode d'exécution préféré de l'invention, le granule est exempt d'additifs tels que des agents liants ou tensioactifs. Dans une variante préférée de ce mode d'exécution, le granule est exempt d'agent liant. De tels granules peuvent satisfaire les exigences de pureté les plus strictes, que ce soit dans le domaine de l'alimentation humaine ou dans le domaine pharmaceutique.

La poudre selon l'invention peut-être constituée exclusivement de granules obtenues par le procédé comprenant un agglomérat de particules de substance minérale, l'agglomérat étant enrobé d'une couche extérieure monolithique.

La largeur de la distribution des diamètres des granules peut être fort variable puisqu'elle dépend essentiellement de la technique d'agglomération utilisée.

La poudre obtenue par le procédé selon l'invention trouve des applications dans divers domaines techniques. En particulier, celles comprenant des granules de bicarbonate de sodium, trouvent des applications pour la fabrication de détergents ou de produits pharmaceutiques.

La première étape du procédé selon l'invention a pour fonction d'agglomérer des particules dont le diamètre moyen est trop petit pour les applications visées, pour former des agglomérats, dont le diamètre moyen est adapté à ces applications. On peut utiliser toute technique d'agglomération connue. A titre d'exemple : le frittage, le pastillage, le compactage.

Comme indiqué ci-dessus, selon la substance minérale dont elles sont constituées et la technique utilisée pour les agglomérer, les particules adhèrent plus ou moins entre elles. Un niveau minimum d'adhésion est cependant nécessaire pour assurer la cohésion de l'agglomérat avant son enrobage.

Dans un mode de réalisation particulier du procédé selon l'invention, les agglomérats de particules sont formés par compactage. Toute technique de compactage adéquate peut être utilisée. Dans une variante avantageuse de ce mode de réalisation; on réalise le compactage des particules par écrasement entre deux cylindres. La galette obtenue est alors concassée pour obtenir les agglomérats de taille désirée. Le produit du concassage est tamisé, les agglomérats trop fins étant recyclés au compactage.

Dans la seconde étape du procédé conforme à l'invention, les agglomérats sont enrobés d'une couche monolithique. Le choix de la technique d'enrobage utilisée (par exemple dragéification, pulvérisation, immersion), dépend des circonstances précises d'application du procédé selon l'invention.

Dans une variante avantageuse du procédé selon l'invention, pour enrober les agglomérats on fait passer une solution sursaturée en une substance constitutive de la couche monolithique au travers d'un lit des agglomérats. Le lit peut être fluidisé ou non. Les lits fluidisés sont toutefois préférés. La croissance cristalline par passage d'une solution sursaturée au travers d'un lit fluidisé est décrite dans le document EP 0352 847 (SOLVAY S.A.). Pour son application au procédé selon l'invention, le lit est constitué des agglomérats à enrober. La sursaturation de la solution saturée peut être obtenue par refroidissement de celle-ci avant son contact avec le lit.

Dans la variante d'exécution où la couche monolithique et les agglomérats sont constitués de bicarbonate de sodium, on a trouvé que la température du lit est avantageusement supérieure à 30°C. D'autre part, il n'y a pas intérêt à ce que cette température soit supérieure ou égale à 70°C.

Dans un mode de réalisation préféré de cette variante, la température du lit est supérieure à 40°C et inférieure à 60°C.

Dans une autre variante avantageuse du procédé selon l'invention, pour enrober les agglomérats, on projette sur ceux-ci une solution sursaturée en une substance constitutive de la couche monolithique. Dans un mode d'exécution préféré de cette variante, les agglomérats sont introduits en continu dans un tambour tournant incliné, soumis à la projection de la solution sursaturée. Le mouvement du tambour assure la répartition homogène de la couche monolithique autour de l'agglomérat. Après un temps de séjour suffisant (qui dépend notamment de l'épaisseur désirée de la couche d'enrobage et peut être réglé par l'inclinaison, les dimensions et la vitesse de rotation du tambour), les agglomérats enrobés quittent le tambour.

L'invention est illustrée par la description suivante en référence au dessin annexé.

La figure unique représente le schéma d'une installation mettant en oeuvre une forme de réalisation particulière du procédé selon l'invention.

L'installation représentée schématiquement à la figure et dont la description du fonctionnement suit, comprend un compacteur à cylindres 2, un concasseur 4, un ensemble de tamis 6, un bac de saturation 8, un échangeur thermique 10, un cristalliseur à lit fluidisé 12 et un sécheur 14.

Des particules de bicarbonate de sodium 1 sont introduites dans le compacteur à cylindre 2. Une galette 3 compactée y est produite. La galette 3 est concassée dans le concasseur 4 en agglomérats 5. Une fraction 7, de granulométrie comprise entre 500 et 1000 µm, est sélectionnée parmi les agglomérats 5 au moyen d'un ensemble de tamis 6. Le refus 16 de dimensions inférieures à 500 µm est recyclé au compacteur 2, tandis que le refus 17 de dimensions supérieures à 1000µm est recyclé au concasseur 4. Les agglomérats sélectionnés 7 sont introduits dans le cristalliseur 12, dont ils constituent le lit fluidisé. Dans le bac de saturation 8, on produit une solution saturée 9 de bicarbonate de sodium. Celle-ci est ensuite refroidie dans l'échangeur thermique 10, de manière à produire une solution sursaturée 11 de bicarbonate de sodium. La solution sursaturée 11 est introduite dans le cristalliseur 12, où elle fluidise le lit de cristaux. La solution 11 est désursaturée au contact des cristaux et ceux-ci sont ainsi progressivement enrobés d'une couche monolithique de bicarbonate de sodium. Le bicarbonate enrobé 13, humide, recueilli du cristalliseur 12, est séché dans le sécheur 14 pour fournir le produit final 15.

Dans un mode de réalisation préféré de l'installation de la figure, le bac de saturation 8, l'échangeur 10 et le cristalliseur 12 sont associés dans un appareil unique, du type de celui décrit dans le brevet européen EP 0352 847 (SOLVAY S.A.).

Les exemples dont la description suit vont faire apparaître l'intérêt de l'invention.

### Exemple 1 (non conforme à l'invention)

Des agglomérats de bicarbonate de sodium compactés et concassés, dont la granulométrie est comprise entre 500 et 1000 µm, ont été soumis au test d'abrasion mécanique suivant.

100g de granules ont été placées dans un tambour cylindrique tournant ayant un diamètre intérieur de 57mm et une longueur de 120 mm, en présence de 400 g de billes de plomb de 6mm de diamètre. Le tambour a été alors soumis à une rotation de 140 tours/minute pendant 30 minutes. A l'issue du traitement, on a mesuré un « indice de résistance à l'abrasion » défini comme étant la fraction, en pour-cent pondéral, du contenu du tambour qui passe au travers d'un tamis de 63 µm. Le résultat du test a été de 3%.

### Exemple 2 (conforme à l'invention)

Un lit de 100 g d'agglomérats de bicarbonate de sodium compactés et concassés, dont la granulométrie est comprise entre 500 et 1000 µm ont été placés sur la grille de fluidisation d'une colonne de fluidisation, la colonne étant en contact avec un bain thermostatique dont la température a été fixée à 50°C. Suite à la circulation ascendante, à une vitesse de 154m/h, d'une solution sursaturée de bicarbonate de sodium au travers de la grille de fluidisation, le lit a été fluidisé. La sursaturation de la solution à été réglée à 2,4 g/kg, grâce à une chute de température de 1,9°C de la solution au travers de l'échangeur.

L'enrobage des agglomérats a été poursuivi pendant une heure, au terme de laquelle on a recueilli les granules et on a mesuré l'épaisseur moyenne de la couche d'enrobage : 3 µm. Les granules conformes à l'invention produites de cette façon ont alors été soumis au test d'abrasion défini ci-dessus à l'exemple 1. Le résultat est 0,6%, démontrant la très importante amélioration de leur résistance à l'abrasion, suite à l'enrobage conformément à l'invention.

### Exemple 3 (conforme à l'invention)

On a procédé comme dans l'exemple 2, sauf que la sursaturation à été réglée à 4,9g/kg, suite à quoi une couche d'enrobage de 10 µm a été déposée sur des agglomérats. Le résultat du test d'abrasion est de 0,1%, montrant encore une amélioration de la résistance à l'abrasion des granules conformes à l'invention.

## Revendications

1. Procédé pour la fabrication d'une poudre comprenant des granules, des granules comprenant un agglomérat de particules de substance minérale, l'agglomérat étant enrobé d'une couche extérieure monolithique, selon lequel, dans une première étape on forme des agglomérats de particules de substance minérale, **caractérisé en ce que**, dans une deuxième étape, on enrobe les agglomérats d'une couche monolithique.

2. Procédé selon la revendication 1, **caractérisé en ce que** les agglomérats de particules sont formés par compactage.

3. Procédé selon la revendication 1 ou 2, **caractérisé en ce que** pour enrober les agglomérats on fait passer une solution sursaturée en une substance constitutive de la couche monolithique au travers d'un lit des agglomérats.

## Claims

1. Process for manufacturing a powder comprising granules, the granules comprising an agglomerate of particles of a mineral substance, the agglomerate being coated with a monolithic outer layer in which, in a first step, agglomerates of particles of the mineral substance are formed, **characterized in that,** in a second step, the agglomerates are coated with a monolithic layer.

2. Process according to Claim 1, **characterized in that** the particle agglomerates are formed by compacting.

3. Process according to Claim 1 or 2, **characterized in that**, to coat the agglomerates, a supersaturated solution of a constituent substance of the monolithic layer is made to pass through a bed of the agglomerates.

## Patentansprüche

1. Verfahren zur Herstellung eines Pulvers enthaltend Granulatkörnchen, wobei die Granulatkörnchen ein Agglomerat von Teilchen einer mineralischen Substanz umfassen, wobei das Agglomerat von einer äußeren monolithischen Schicht umhüllt ist, nach welchem in einem ersten Schritt Agglomerate von Teilchen der mineralischen Substanz gebildet werden, **dadurch gekennzeichnet, dass** in einem zweiten Schritt die Agglomerate mit einer monolithischen Schicht umhüllt werden.

2. Verfahren nach Anspruch 1, **dadurch gekennzeichnet, dass** die Agglomerate der Teilchen durch Verdichten gebildet werden.

3. Verfahren nach einem der Ansprüche 1 oder2, **dadurch gekennzeichnet, dass** zum Umhüllen der Agglomerate eine gesättigte Lösung einer Substanz, welche die monolithische Schicht bildet, durch ein Agglomeratbett hindurchgeführt wird.
